# EUROPEAN PATENT APPLICATION

(11) **EP 3 540 271 A1**
(43) Date of publication of application: **18.09.2019**
(21) Application number: 17868700.0
(22) Date of filing: 20.10.2017
(51) Int. Cl.: F16H 59/02, F16H 59/04, B60K 20/02, G05G 1/04

(54) **VEHICLE GEARSHIFT DEVICE**

(30) Priority: 11.11.2016 KR 20160150433
(71) Applicant: LS Mtron Ltd., Anyang-si, Gyeonggi-do 14119 (KR)
(72) Inventor: CHOI, Kyu Beom, Daejeon 35284 (KR)
(74) Representative: Botti, Mario
(86) International application number: PCT/KR2017/011652
(87) International publication number: WO 2018/088715

(57) **Abstract**

The present invention relates to a gearshift device for transmitting a gear shifting operation to a driving gear assembly, and can provide a gearshift device comprising: a shaft of which one end is connected to one end of the gearshift so as to enable rectilinear movement along the axial direction and rotation along the circumferential direction according to the gear shifting operation; a shift arm of which one end is connected to the other end of the shaft so as to enable rectilinear movement and rotation corresponding to each of the rectilinear movement and rotation of the shaft, and of which the other end is selectively coupled to a first shift rail and a second shift rail connected to the driving gear assembly; a shaft holder fixed to a vehicle body, slidably accommodating the shaft, and restricting the position of the shaft; and a holder bracket coupled so as to be slidable in the circumferential direction of the shaft at the outer periphery of the shaft holder, and a connection rod respectively hinge-coupled to the middle portion of the gearshift at both ends thereof.

## Description

### [Technical Field]

The present disclosure relates to a gearshift device that transmits a gear shifting operation of an agricultural machinery vehicle such as a tractor to a transmission, and more particularly, to a gearshift device that performs a plurality of gear shifting operations using one gearshift.

### [Background Art]

Agriculture machine such as a tractor is designed to transmit rotational power generated by the engine to the wheels through the transmission, and an operator manipulates the transmission using the gearshift installed at the driver's seat to transmit the power generated by the engine to the driving wheels at the proper number of rotations and torque for driving conditions.

For example, as shown in FIG. 9, in the case of a conventional gearshift device 1000 disclosed by Korean Patent No. 10-1512226, the gearshift 1001 is configured to rotate around a pivot part 1004 so that the end of the gearshift 1001 is coupled to any one of shift rails 1002, 1003. Additionally, each shift rail 1002, 1003 connected to the transmission is manipulated according to driving conditions.

However, the conventional gearshift device 1000 has the same center A of pivot rotation for front-back operation and left-right operation of the end of the gearshift 1001, and thus rotation ratios of front-back operation and left-right operation of the gearshift 1001 are the same.

Accordingly, because the conventional gearshift device 1000 has the same magnitude of left and right operating force as front-back operation, it is difficult for a user to differently set the operating force for front-back operation and left-right operation of the gearshift 1001 as necessary, and independently implement the front-back operation and the left-right operation.

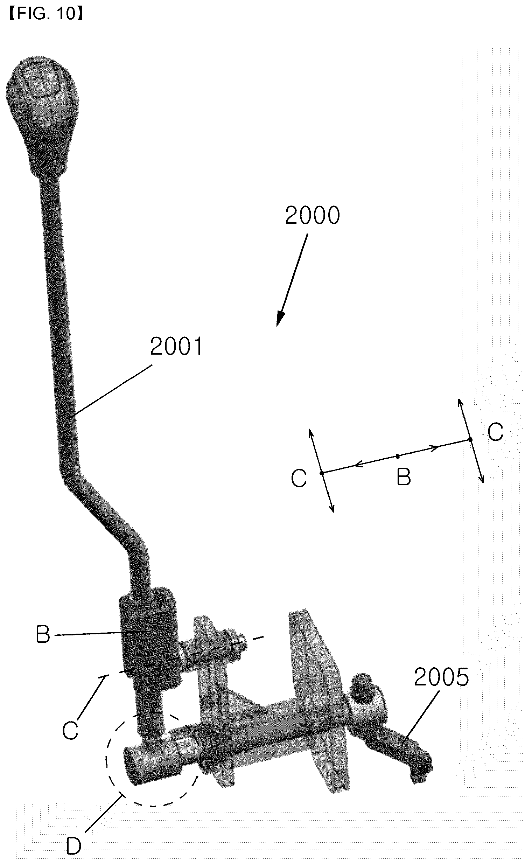

On the other hand, as shown in FIG. 10, another conventional gearshift device 2000 independently separates front-back operation and left-right operation of the gearshift 2001. In detail, a shaft 2002 is moved by pivot rotation of the gearshift 2001 around a pivot center B through the left-right operation of the gearshift 2001 so that a shift arm 2005 coupled to the other end of the shaft 2002 is coupled to a shift rail (not shown), and the shaft 2002 is rotated by pivot rotation of the gearshift 2001 around a pivot center C through the front-back operation of the gearshift 2001 so that the shift arm 2005 moves the coupled shift rail.

However, the above-described another conventional gearshift device 2000 cannot change the positions of the pivot centers B, C, and needs many additional components to set the pivot centers B, C.

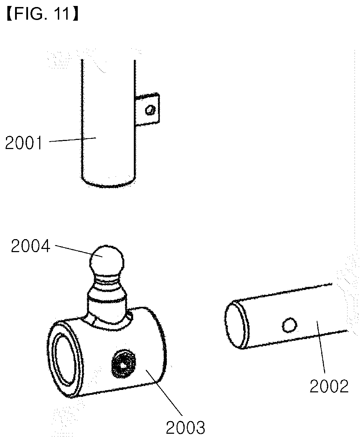

Additionally, as shown in FIG. 11, because the gearshift 2001 is connected to the shaft 2002 via a holder 2003 having a spherical connection part 2004, a predetermined gap may occur in the connection of the gearshift 2001 and the connection part 2004.

Additionally, because the gearshift 2001 and the connection part 2004 are connected in the shape of a ball joint, the operating force of the gearshift 2001 is not effectively transmitted to the shaft 2002.

### [Disclosure]

### [Technical Problem]

The present disclosure is designed to solve the above-described problems of the conventional arts, and therefore the present disclosure is directed to providing a gearshift device with simplified configuration for left-right pivot operation of the gearshift.

Additionally, the present disclosure is directed to providing a gearshift device with reduced number of components of the gearshift device to prevent the operating force transmission efficiency of the gearshift from being lowered due to coupling between the components.

Further, the present disclosure is directed to providing a gearshift device that is easy to perform the front-back operation of the gearshift requiring a larger force than the left-right operation of the gearshift requiring a small force.

### [Technical Solution]

To achieve the above-described objects, the present disclosure provides a gearshift device for transmitting a gear shifting operation to a driving gear assembly, including a shaft of which one end is connected to one end of the gearshift so as to enable rectilinear movement along the axial direction and rotation along the circumferential direction according to the gear shifting operation, a shift arm of which one end is connected to the other end of the shaft so as to enable rectilinear movement and rotation corresponding to each of the rectilinear movement and rotation of the shaft, and of which the other end is selectively coupled to a first shift rail and a second shift rail connected to the driving gear assembly, a shaft holder fixed to a vehicle body, slidably accommodating the shaft, and restricting the position of the shaft, and a holder bracket coupled so as to be slidable in the circumferential direction of the shaft at the outer periphery of the shaft holder, and a connection rod respectively hinge-coupled to the middle portion of the gearshift at both ends thereof.

Additionally, upon pivot operation of the gearshift of the present disclosure around a point of the middle portion in the axial direction of the shaft, the shaft may be moved forward or backward within a predefined range in the axial direction, and the shift arm may be selectively coupled to any one of the first shift rail and the second shift rail.

Additionally, upon pivot operation of the gearshift of the present disclosure around a connection point of the gearshift and the shaft in the circumferential direction of the shaft, the shaft may rotate within a predefined range in the circumferential direction, and the shift arm may rotate around the other end of the shaft to slide the coupled first shift rail or second shift rail in the axial direction of the first shift rail or the second shift rail.

The shift arm of the present disclosure may further include a coupling part at a point where the shift arm is coupled to any one of the first shift rail and the second shift rail, and the coupling part may be inserted into a groove formed in the first shift rail or the second shift rail so that the shift arm is selectively coupled to any one of the first shift rail and the second shift rail.

Additionally, the present disclosure may provide the gearshift device in which a ratio of a distance from the other end of the gearshift to the connection point of the shaft and the shift arm to a distance from the coupling part to the connection point of the shaft and the shift arm is larger than a ratio of distance from the other end of the gearshift to the point of the middle portion to a distance from one end of the gearshift to the point of the middle portion.

Additionally, the present disclosure may provide the gearshift device further including a spring element connected to a predefined location between one end of the gearshift and the point of the middle portion of the gearshift, and a predefined location of the connection rod.

Additionally, one end of the gearshift of the present disclosure may be hinge-connected to one end of the shaft, and the connection rod of the present disclosure may further include a lever bracket in U-shaped cross section covering around the point of the middle portion of the gearshift.

Additionally, the connection rod of the present disclosure may further include a connection bracket in U-shaped cross section hinge-connected to the holder bracket.

Additionally, the present disclosure may provide the gearshift device further including a lever holder coupled to one end of the shaft to operate integrally with the shaft, wherein one end of the gearshift is hinge-connected to the lever holder.

### [Advantageous Effects]

The present disclosure can simplify configuration for left-right pivot operation of the gearshift. Additionally, the present disclosure can significantly reduce the number of components of the gearshift device, thereby preventing the operating force transmission efficiency of the gearshift from being lowered due to coupling between the components.

Further, the present disclosure can easily perform the front-back operation of the gearshift requiring a larger force than the left-right operation of the gearshift requiring a small force.

### [Description of Drawings]

FIG. 1 is a schematic perspective view showing a gearshift device according to an embodiment of the present disclosure.
FIG. 2 is a schematic exploded perspective view showing a gearshift device according to an embodiment of the present disclosure.
FIG. 3 is a schematic front cross-sectional view showing a gearshift device according to an embodiment of the present disclosure.
FIG. 4 is a front cross-sectional view showing gear shift ratios of front-back operation and left-right operation of the gearshift device shown in FIG. 3.
FIG. 5 is a schematic front view showing left-right operation of the gearshift device shown in FIG. 3.
FIG. 6 is a schematic perspective view showing coupling of a shift arm with a shift rail by left-right operation of the gearshift device shown in FIG. 5.
FIG. 7 is a schematic side view showing front-back operation of the gearshift device shown in FIG. 3.
FIG. 8 is a schematic plane view showing that a shift arm slides a shift rail by front-back operation of the gearshift device shown in FIG. 7.

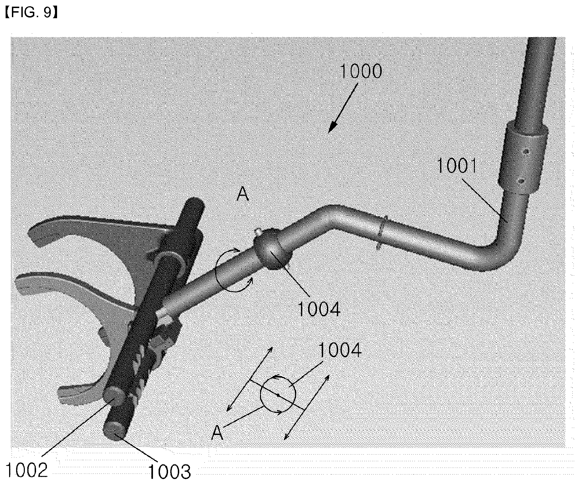

FIG. 9 is a schematic perspective view showing the operation of a conventional gearshift device.
FIG. 10 is a schematic perspective view showing the operation of another conventional gearshift device.
FIG. 11 is an exploded perspective view of section D of another conventional gearshift device shown in FIG. 10.

### [Best Mode]

Hereinafter, specific components of a gearshift device 1 according to the present disclosure and their operational relation will be described in detail through the preferred embodiments of the present disclosure with reference to the accompanying drawings.

Prior art the description, in many embodiments, components having the same configuration will be representatively described in an embodiment using the same reference sign, and in other embodiments, different components will be only described.

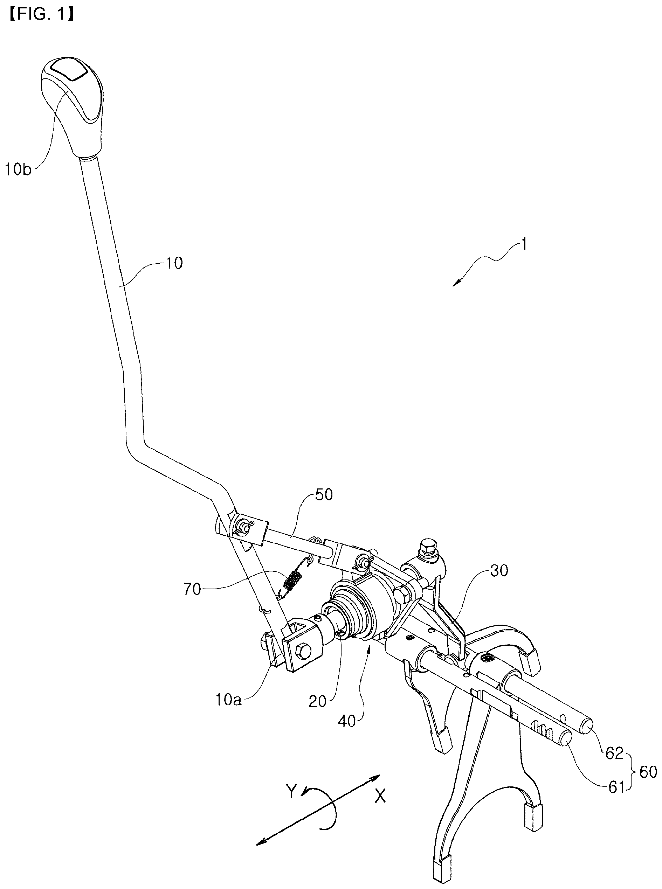

FIG. 1 is a schematic perspective view showing the gearshift device 1 according to an embodiment of the present disclosure. As shown in FIG. 1, the gearshift device 1 transmits the front-back operation or left-right operation of a gearshift 10 to a driving gear assembly (not shown). In detail, the gearshift 10 is installed at the driver's seat (not shown) of agricultural machine such as a tractor to allow the driver to shift gears. The gearshift 10 limits the movement by a gearshift indicator (not shown), and for example, in the case of a 4-speed transmission, may selectively shift from first gear to fourth gear by combining the front-back operation and the left-right operation in the shape of the letter "H" by the gearshift indicator.

Additionally, one end 10a of the gearshift 10 is connected to one end of a shaft 20, and the shaft 20 may enable rectilinear movement along the axial direction X of the shaft 10 and rotation along the circumferential direction Y of the shaft 10 according to the operation of the gearshift 10, and the shaft 20 is slidably accommodated in a shaft holder 40 fixed to a vehicle body to enable rectilinear movement along the axial direction X and rotation along the circumferential direction Y, while restricting the position of the shaft 20.

Additionally, the other end of the shaft 20 is connected to one end of a shift arm 30, and the shift arm 30 enables rectilinear movement with the rectilinear movement of the shaft 20, or rotation with the rotation of the shaft 20. The other end of the shift arm 30 may be selectively coupled to a first shift rail 61 or a second shift rail 62 connected to the driving gear assembly (not shown).

Meanwhile, a connection rod 50 is interposed between the shaft holder 40 and the gearshift 10, and is hinge-coupled to each of the shaft holder 40 and the gearshift 10 to enable pivot rotation.

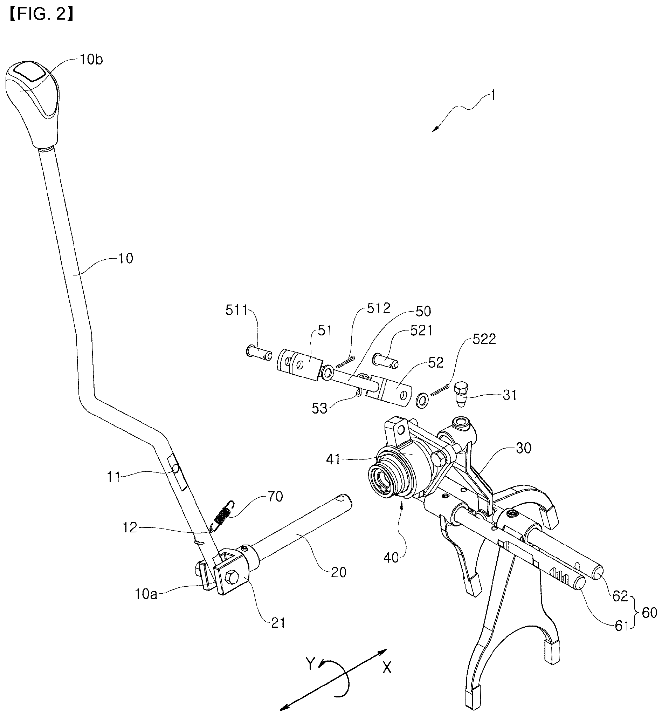

FIG. 2 is an exploded perspective view showing a detailed relationship between components of the gearshift device 1 according to an embodiment of the present disclosure. As shown in FIG. 2, a holder bracket 41 is coupled to the outer periphery of the shaft holder 40 to enable sliding rotation in the circumferential direction of the shaft 20. Accordingly, when the gearshift 10 connected through the connection rod 50 operates in the circumferential direction Y of the shaft 20, that is, the gearshift 10 operates forward and backward, the holder bracket 41 rotates together by sliding along the outer periphery of the shaft holder 40.

Describing the coupling relation of the connection rod 50, as described above, the connection rod 50 is disposed by respective hinge coupling between a point 11 of the middle portion of the gearshift 10 and part of the holder bracket 41. In detail, the connection rod 50 may further include brackets 51, 52 in U-shaped cross section at both ends thereof. At the gearshift 10 side connection point, connection may be made by forming a hole in the point 11 of the middle portion of the gearshift 10 and the lever bracket 51 at one end of the gearshift 10 side, inserting a pin 511 into the hole and fixing with a clip 512. Additionally, at the holder bracket 41 side connection point, likewise, connection may be made by forming a hole in part of the holder bracket 41 and the connection bracket 52 at the other end of the holder bracket 41 side, inserting a pin 521 into the hole and fixing with a clip 522. Accordingly, the connection rod 50 enables pivot rotation for each of the gearshift 10 and the holder bracket 41.

Additionally, because the brackets 51, 52 are U-shaped, the connection rod 50 only rotates until one end touches the outer surface of the gearshift 10 and the other end touches the outer surface of the holder bracket 41, thereby restricting the range of pivot operation of the gearshift 10 in the axial direction X of the shaft 20.

Additionally, a lever holder 21 for accommodating one end 10a of the gearshift 10 is disposed at one end of the shaft 20, and the lever holder 21 and one end 10a of the gearshift 10 may be rotatably hinge-connected by bolting. Accordingly, it is possible to prevent the coupling of the gearshift 10 and the shaft 20 from becoming instable.

Meanwhile, a spring element 70 connected to a predefined location 12 between one end 10a of the gearshift 10 and the point 11 of the middle portion of the gearshift 10 and a predefined location 53 of the connection rod 50 is installed to return the gearshift 10 to the original position through the restoring force of the spring element 70 after pivot operation of the gearshift 10 in the axial direction X of the shaft 20.

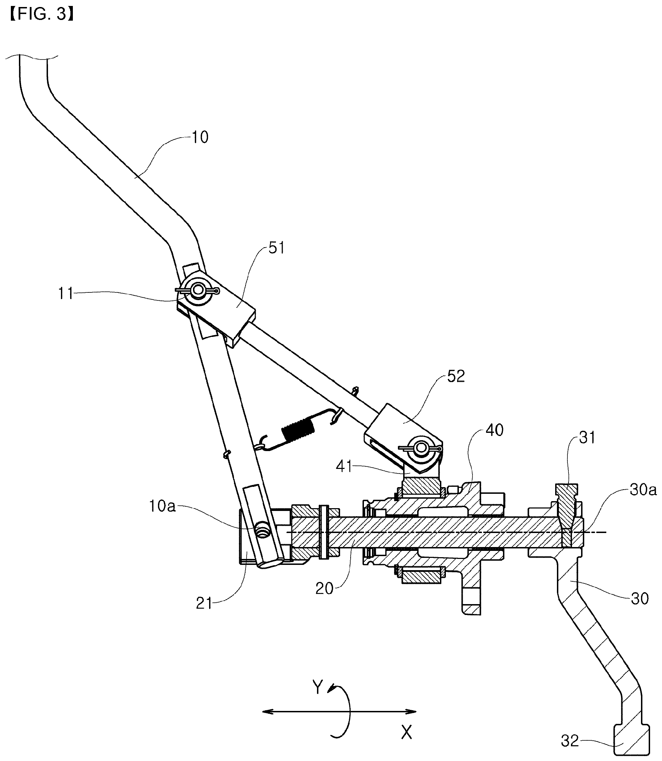

FIG. 3 is a schematic front cross-sectional view showing the gearshift device 1 according to an embodiment of the present disclosure. As shown in FIG. 3, because the other end of the shaft 20 is coupled to the shift arm 30, and the shaft 20 and the shift arm 30 are coupled with a fixing bolt 31, when the shaft 20 makes rectilinear movement, the shift arm 30 also makes rectilinear movement together, and when the shaft 20 rotates, the shift arm 30 also rotates around a coupling axis 30a together. The shift arm 30 has, at the other end, a coupling part 32 that protrudes from the outer peripheral surface of the shift arm 30, and the operation of the coupling part 32 will be described in detail below.

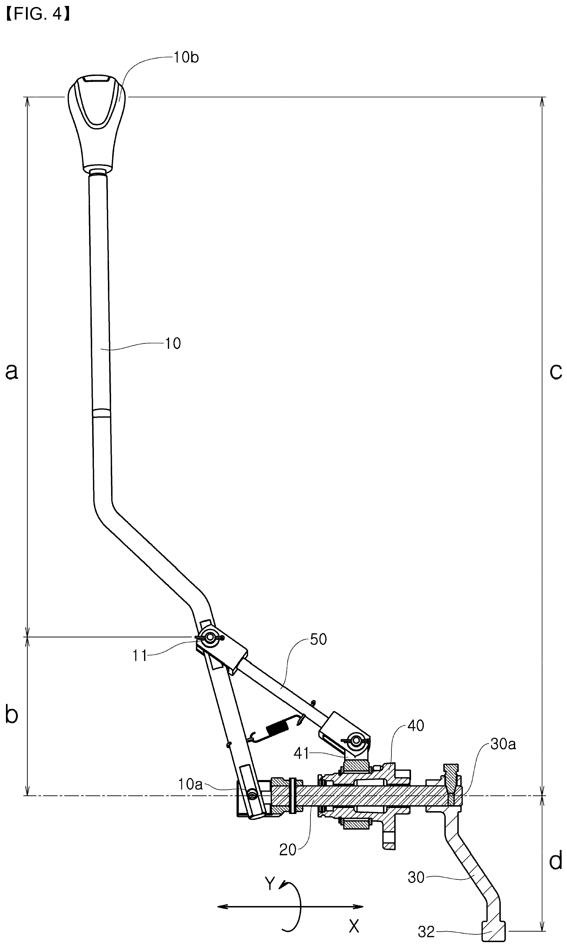

FIG. 4 is a front cross-sectional view showing gear shift ratios of front-back operation and left-right operation of the gearshift device 1 shown in FIG. 3. As shown in FIG. 4, the gearshift 10 operates leftward and rightward with respect to the point 11 of the middle portion of the gearshift 10, and accordingly, the shaft 20 and the shift arm 30 operate leftward and rightward in the axial direction X of the shaft 20 together.

In this instance, when the vertical distance from the other end 10b of the gearshift 10 to the point 11 of the middle portion is a, and the vertical distance from the point 11 of the middle portion to a point where the gearshift 10 is coupled to the shaft 20, that is, one end 10a of the gearshift 10 is b, the magnitude of the operating force for left-right operation of the gearshift 10 may be adjusted by setting a ratio of a to b.

Additionally, when the gearshift 10 operates forward and backward with respect to the connection point 10a of the gearshift 10 and the shaft 20, the shift arm 30 also operates forward and backward in the circumferential direction Y of the shaft 20 together.

Likewise, when the vertical distance from the other end 10b of the gearshift 10 to the connection point 10a of the shaft 20 and the shift arm 30, that is, the coupling axis 30a is c, and the vertical distance from the coupling axis 30a to the coupling part 32 of the shift arm 30 is d, the magnitude of operating force for front-back operation of the gearshift 10 may be adjusted by setting a ratio of c to d.

Accordingly, the present disclosure can simplify the configuration for left-right pivot operation of the gearshift 10, and significantly reduce the number of components of the gearshift device 1, thereby preventing the operating force transmission efficiency of the gearshift 10 from being lowered due to coupling between the components.

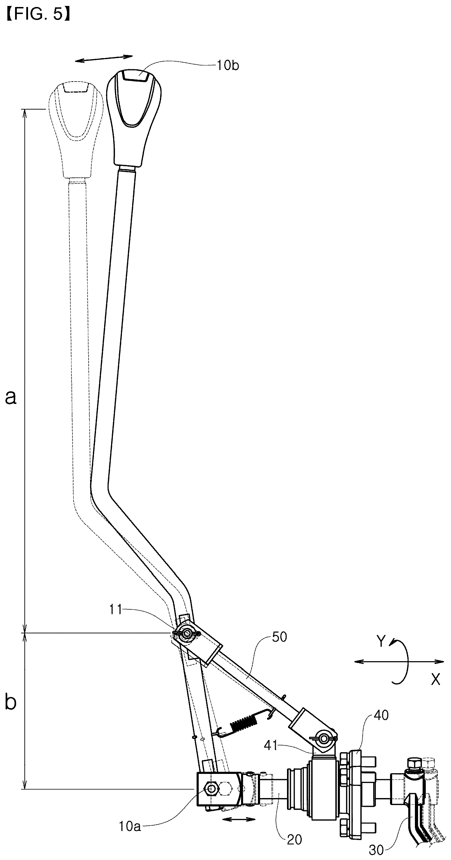

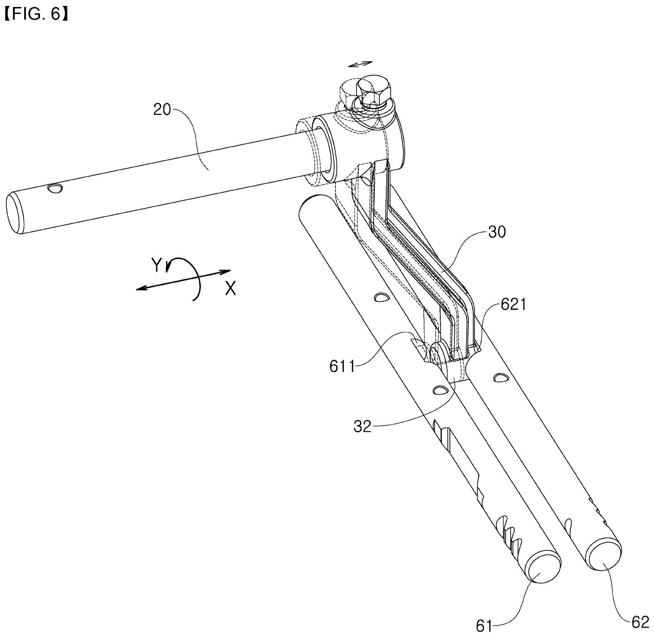

FIGS. 5 and 6 are a front view and a perspective view showing the detailed operation of the components of the gearshift device 1 of the present disclosure by the left-right operation of the gearshift 10.

As shown in FIG. 5, when the driver manipulates the other end 10b of the gearshift 10 leftward and rightward, one end 10a of the gearshift 10 also rotates around the point 11 of the middle portion of the gearshift 10 together, and in this instance, the left-right operation direction of the other end 10b and the left-right movement direction of one end 10a are opposite to each other. Subsequently, with the movement of one end 10a of the gearshift 10, the shaft 20 and the shift arm 30 connected thereto in a sequential order also operate leftward and rightward, i.e., in the axial direction X of the shaft 20 together, and as described above, as the position of the circumference of the shaft 20 is restricted by the shaft holder 40, the shaft 20 and the shift arm 30 implement rectilinear movement.

As shown in FIG. 6, when the shift arm 30 operates linearly leftward and rightward, that is, in the axial direction X of the shaft 20, the coupling part 32 formed at the other end of the shift arm 30 may be coupled to the shift rails 61, 62 when inserted into a coupling groove 611 formed in the first shift rail 61 or a coupling groove 621 formed in the second shift rail 62. Although FIG. 6 shows that the coupling part 32 is coupled to the second shift rail 62, the coupling part 32 may be coupled to the first shift rail 61 upon operation in a reverse direction.

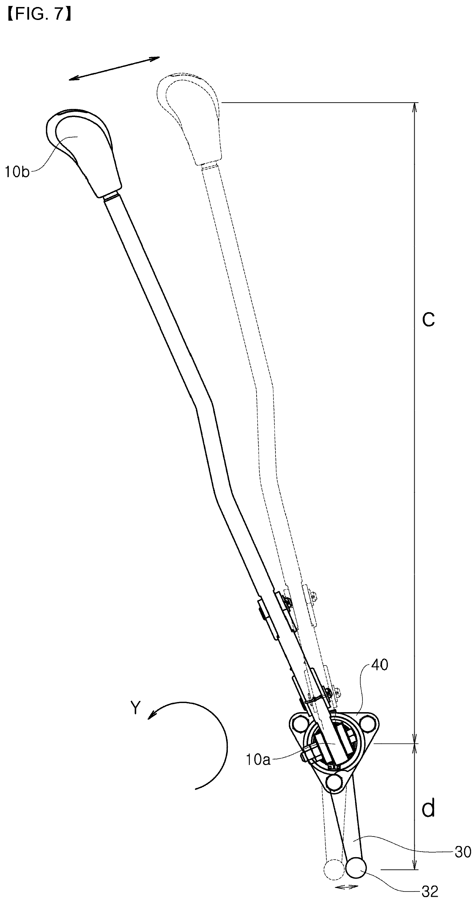

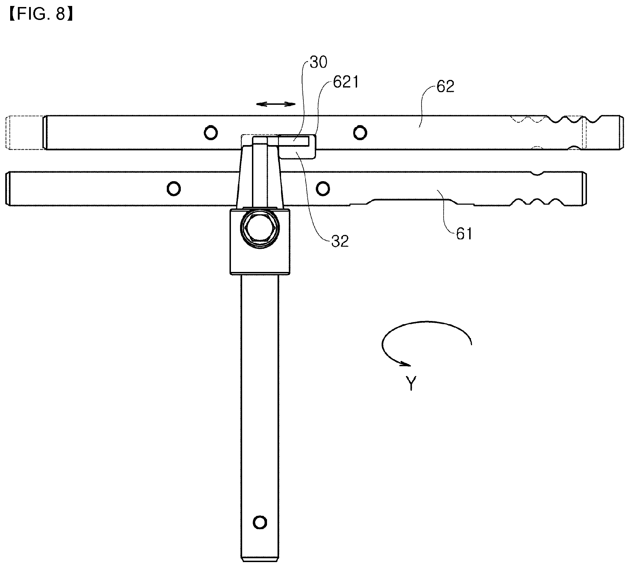

FIGS. 7 and 8 are a side view and a plane view showing the detailed operation of the components of the gearshift device 1 when the gearshift 10 operates forward and backward after the gearshift 10 is coupled to the first shift rail 61 or the second shift rail 62 by the left-right operation as described above.

As shown in FIG. 7, when the driver manipulates the other end 10b of the gearshift 10 forward and backward, the gearshift 10 rotates around the coupling point 10a of the gearshift 10 and the shaft 20, and accordingly, the shaft 20 and the shift arm 30 connected thereto in a sequential order also rotate together.

As shown in FIG. 8, when the coupling part 32 of the shift arm 30 is coupled to any one of the coupling groove 611 of the first shift rail 61 and the coupling groove 621 of the second shift rail 62, as the shift arm 30 rotates, the first shift rail 61 or the second shift rail 62 slides in the axial direction of the shift rails 61, 62.

Meanwhile, a greater force is required when the driver manipulates the gearshift 10 forward and backward (to slide the selected shift rail 61 or 62) than when the driver manipulates the gearshift 10 leftward and rightward (to select the first shift rail 61 or the second shift rail 62), and accordingly, in FIG. 4, the c/d ratio is set to be larger than the a/b ratio to allow the driver to easily manipulate the gearshift device 1. When the driver manipulates the gearshift 10 leftward and rightward, the gear shift ratio is a/b, and when the driver manipulates the gearshift 10 forward and backward, the gear shift ratio is c/d.

Referring to FIG. 4, when the gearshift 10 operates leftward and rightward, the rotation center is the point 11 of the middle portion of the gearshift 10, and when the gearshift 10 operates forward and backward, the rotation center is the connection point 10a of the gearshift 10 and the shaft 20. When the rotation centers of left-right operation and front-back operation of the gearshift 10 are the same, the gear shift ratios of left-right operation and front-back operation of the gearshift 10 are the same, but when the rotation center of left-right operation of the gearshift 10 and the rotation center of front-back operation are different like the gearshift device 1 according to the present disclosure, the gear shift ratios of left-right operation and front-back operation of the gearshift 10 may be different. In the gearshift device 1 according to the present disclosure, the gear shift ratio c/d of the front-back operation of the gearshift 10 is larger than the gear shift ratio a/b of the left-right operation of the gearshift 10.

Accordingly, the present disclosure easily performs the front-back operation of the gearshift requiring a larger force than the left-right operation of the gearshift 10 requiring a small force, contributing to the convenience in use for the driver.

As above, those skilled in the art will understand that the present disclosure may be embodied in other specific forms without departing from the technical spirit or essential features.

Therefore, it should be understood that the embodiments described hereinabove are provided for illustration purpose only, but not intended to limit the present disclosure to the disclosed embodiments, and the scope of the present disclosure is defined by the appended claims rather than the above-described detailed description, and it should be interpreted that the scope of the present disclosure covers all modifications or variations derived from the meaning and scope of the appended claims and the equivalent concept.

**[Detailed Description of Main Elements]**

| | |
|---|---|
| 1: Gearshift device | 10: Gearshift |
| 10a: One end of gearshift | 10b: Other end of gearshift |
| 11: Point of middle portion of gearshift | |
| 12: Gearshift side spring element coupling location | |
| 20: Shaft | 21: Lever holder |
| 30: Gearshift arm | 30a: Coupling axis |
| 31: Fixing bolt | 32: Coupling part |
| 40: Shaft holder | 41: Holder bracket |
| 50: Connection rod | 51: Lever bracket |
| 52: Connection bracket | |
| 53: Connection rod side spring element coupling location | |
| 511, 521: Pin | 512, 522: Clip |
| 60: Shift rail | 61: First shift rail |
| 611: First shift rail coupling groove | 62: Second shift rail |
| 621: Second shift rail coupling groove | 70: Spring element |
| a: Distance from the other end of gearshift to point of middle portion | |
| b: Distance from one end of gearshift to point of middle portion | |
| c: Distance from the other end of gearshift to connection point of shaft and gearshift arm | |
| d: Distance from coupling part to connection point of shaft and gearshift arm | |

## Claims

1. A gearshift device (1) for transmitting a gear shifting operation to a driving gear assembly, comprising:
a shaft (20) of which one end is connected to one end (10a) of the gearshift (10) so as to enable rectilinear movement along the axial direction (X) and rotation along the circumferential direction (Y) according to the gear shifting operation;
a shift arm (30) of which one end is connected to the other end of the shaft (20) so as to enable rectilinear movement and rotation corresponding to each of the rectilinear movement and rotation of the shaft (20), and of which the other end is selectively coupled to a first shift rail (61) and a second shift rail (62) connected to the driving gear assembly;
a shaft holder (40) fixed to a vehicle body, slidably accommodating the shaft (20), and restricting the position of the shaft (20); and
a holder bracket (41) coupled so as to be slidable in the circumferential direction (Y) of the shaft (20) at the outer periphery of the shaft holder (40), and a connection rod (50) respectively hinge-coupled to the middle portion (11) of the gearshift (10) at both ends thereof.

2. The gearshift device (1) according to claim 1, wherein upon pivot operation of the gearshift (10) around a point of the middle portion (11) in the axial direction (X) of the shaft (20), the shaft (20) is moved forward or backward within a predefined range in the axial direction (X), and the shift arm (30) is selectively coupled to any one of the first shift rail (61) and the second shift rail (62).

3. The gearshift device (1) according to claim 1, wherein upon pivot operation of the gearshift (10) around a connection point of the gearshift (10) and the shaft (20) in the circumferential direction (Y) of the shaft (20), the shaft (20) rotates within a predefined range in the circumferential direction (Y), and the shift arm (30) rotates around the other end of the shaft (20) to slide the coupled first shift rail (61) or second shift rail (62) in the axial direction of the first shift rail (61) or the second shift rail (62).

4. The gearshift device (1) according to claim 1, wherein the shift arm (30) further comprises a coupling part (32) at a point where the shift arm (30) is coupled to any one of the first shift rail (61) and the second shift rail (62), and
the coupling part (32) is inserted into a groove (611, 621) formed in the first shift rail (61) or the second shift rail (62) so that the shift arm (30) is selectively coupled to any one of the first shift rail (61) and the second shift rail (62).

5. The gearshift device (1) according to claim 4, wherein a ratio (c) of a distance from the other end of the gearshift (10) to the connection point of the shaft (20) and the shift arm (30) to a distance (d) from the coupling part (32) to the connection point of the shaft (20) and the shift arm (30) is larger than a ratio of distance (a) from the other end (10b) of the gearshift (10) to the point of the middle portion (11) to a distance (b) from one end (10a) of the gearshift (10) to the point of the middle portion (11).

6. The gearshift device (1) according to claim 1, further comprising:
a spring element (70) connected to a predefined location between one end (10a) of the gearshift (10) and the point of the middle portion (11) of the gearshift (10), and a predefined location of the connection rod (50).

7. The gearshift device (1) according to claim 1, wherein one end of the gearshift (10) is hinge-connected to one end of the shaft (20).

8. The gearshift device (1) according to claim 1, wherein the connection rod (50) further comprises a lever bracket (51) in U-shaped cross section covering around the point of the middle portion of the gearshift (10).

9. The gearshift device (1) according to claim 1, wherein the connection rod (50) further comprises a connection bracket (52) in U-shaped cross section hinge-connected to the holder bracket (41).

10. The gearshift device (1) according to claim 1, further comprising:
a lever holder (21) coupled to one end of the shaft (20) to operate integrally with the shaft (20),
wherein one end of the gearshift (10) is hinge-connected to the lever holder (21).
